# EUROPEAN PATENT APPLICATION

(11) **EP 2 755 144 A1**
(43) Date of publication of application: **16.07.2014**
(21) Application number: 12830196.7
(22) Date of filing: 20.07.2012
(51) Int. Cl.: G06F 17/30

(54) **METHOD AND DEVICE FOR EXTENDING PAGE TAG, AND COMPUTER STORAGE MEDIUM**

(30) Priority: 09.09.2011 CN 201110268453
(71) Applicant: Tencent Technology (Shenzhen) Co., Ltd, Futian, Guangdong 518057 (CN)
(72) Inventor: LI, Yonghua, Shenzhen Guangdong 518057 (CN)
(74) Representative: Jansen, Cornelis Marinus
(86) International application number: PCT/CN2012/078963
(87) International publication number: WO 2013/034033

(57) **Abstract**

A method and apparatus for extending a page tag and a computer storage medium are provided to implement interaction between a page tag and an operating system function, and improve user experiences. The method includes: parsing a page; determining whether the page comprises an identifiable comment tag; parsing the comment tag and obtaining an application function of a page tag defined by the comment tag, when the page comprises the identifiable comment tag; executing the application function of the page tag; and displaying a result of executing the application function of the page tag on the page. The examples are mainly used in a procedure of extending the page tag.

## Description

This application claims the benefit of priority from Chinese Patent Application, No. 201110268453.9, entitled "method and apparatus for extending a page tag" and filed by Tencent technology (Shenzhen) company limited on September 9, 2011, the entire content of which is hereby incorporated by reference.

### Technical Field

The present invention relates to page operation technologies, more particularly, to a method and apparatus for extending a page tag, and a computer storage medium.

### Background

Currently, page tags which are able to interact with operating system functions are widely used on terminal devices, especially on mobile terminal devices. However, when a page is displayed, no matter whether the page complies with a Wireless Markup Language (WML) page standard, an extensible HyperText Markup Language (XHTML) page standard, or a Hyper Text Mark-up Language (HTML) page standard, no page tag is defined to interact with the operating system functions. The operating system functions include sending a short message, sending a multimedia message, adjusting system volume, adjusting lightness of a screen, displaying GPS information, displaying battery information, displaying memory information, refreshing a specific area in the page and etc. The page tag can only be used for indication, and the user cannot implement functions of applications by operating the page tag on the page.

### Summary

Embodiments of the present invention provide a method and apparatus for extending a page tag, and a computer storage medium, so as to implement interaction between a page tag and an operating system function, and improve user experiences.

A method for extending a page tag includes:
parsing a page; determining whether the page comprises an identifiable comment tag;
parsing the comment tag and obtaining an application function of a page tag defined by the comment tag, when the page comprises the identifiable comment tag;
executing the application function of the page tag; and displaying a result of executing the application function of the page tag on the page.

An apparatus for extending a page tag includes:
a determining unit, to parse a page, determine whether the page comprises an identifiable comment tag;
an obtaining unit, to parse the comment tag and obtain an application function of a page tag defined by the comment tag, when the determining unit determines that the page comprises the identifiable comment tag;
an executing unit, to execute the application function of the page tag; and
a first displaying unit, to display a result of executing the application function of the page tag on the page.

According to the technical solutions provided by embodiments of the present invention, when the page is parsed, if the page includes the identifiable comment tag, the application function of the page tag defined by the comment tag is obtained. Then the application function of the page tag is executed, and the result of executing the application function of the page tag is displayed on the page. Therefore, the interaction between the page tag and the operating system function is implemented, and the user experience is improved.

### Brief Description of the Drawings

Figure 1 is a flowchart illustrating a method for extending a page tag according to various embodiments of the present invention.
Figure 2 is a schematic diagram illustrating a page tag displayed in a page according to various embodiments of the present invention.
Figure 3 is a schematic diagram illustrating a structure of an apparatus for extending a page tag according to various embodiments of the present invention.
Figure 4 is a schematic diagram illustrating a structure of another apparatus for extending a page tag according to various embodiments of the present invention.
Figure 5 is a schematic diagram illustrating a structure of another apparatus for extending a page tag according to various embodiments of the present invention.
Figure 6 is a schematic diagram illustrating a structure of another apparatus for extending a page tag according to various embodiments of the present invention.

### Detailed Description

Technical solution of the present invention will be illustrated in detail hereinafter with reference to the accompanying drawings and specific examples. It will be readily apparent however, that the present disclosure may be practiced without limitation to these specific details. Other examples obtained by one skilled in the art without creative labor belong to the protection scope of the present disclosure.

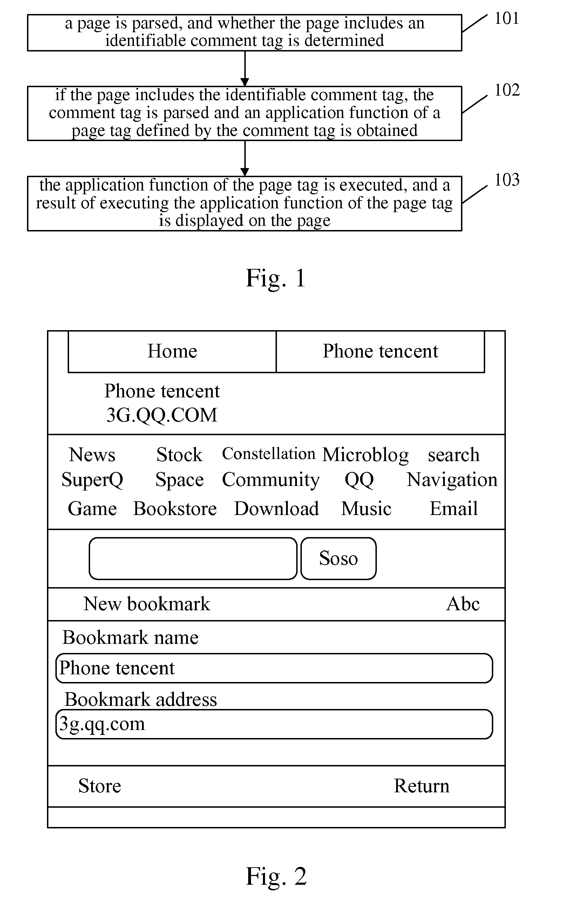

Figure 1 is a flowchart illustrating a method for extending a page tag according to various embodiments of the present invention. As shown in Figure 1, the method includes the following processing.

At 101, a page is parsed, and whether the page includes an identifiable comment tag is determined.

It should be noted that, before the processing at 101 is performed, the page tag may be defined by the comment tag on the page. The comment tag is used for explanation, when an application including the comment tag is executed by a device, if the device cannot identify the comment tag, the comment tag may be ignored and not executed. Hence, when the page tag is defined by the comment tag, if the browser parsing the page cannot identify the comment tag, the displaying of other contents of the page will not be affected by the page tag defined by the comment tag, so that the method may be applied to browsers of different types.

The comment tag may be defined as:
start tag: "<!--" + "mtt" + "especial tag name" + "-->"
   and/or
end tag: "<!--" + "/mtt" + "especial tag name" + "-->"

The defining of the especial tag name includes but not limited to the contents recorded in table 1.

**Table 1**

| especial tag name | description |
|---|---|
| Mttapp | call another application or plugin |
| Mttsms/mttmms | call a SMS/MMS interface or send designated contents to a designated number by using the SMS/MMS |
| mttclose | close a current window |
| mttcopy | copy designated texts |
| Mtttel | dial a designated phone number |
| Mttgps | display a current GPS location |
| mttweather | display current weather information |
| mttmark | store a bookmark |
| mttprefeth | pre-read contents of an address pointed by a current included hyperlink into a local buffer |
| mttmore | hold contents in one line, and display all contents after a click operation |

For example, a link of "storing a bookmark" which can be clicked on is defined. After a user clicks on the link on the page, a bookmark storing interface is displayed, and a title of "Phone Tencent" and an address of "3g.qq.com" are pre-filled; the comment tag may be defined as follows to implement the above functions:
<!-mttmark vtype=a showtvalue="storing mark" href="3g.qq.com" title=" Phone Tencent"<!--/mttmark-->.

At 102, if the page includes the identifiable comment tag, the comment tag is parsed and an application function of a page tag defined by the comment tag is obtained.

At 103, the application function of the page tag is executed, and a result of executing the application function of the page tag is displayed on the page.

According to the example at 101, when the application function of the "storing a bookmark" is executed, as shown in Figure 2, on the interface, a bookmark name is pre-filled with "phone tencent" and a bookmark address is pre-filled with "3g.qq.com".

In addition, after the comment tag is parsed and the application function of the page tag defined by the comment tag is obtained, the following processing may be performed to display the application function of the page tag.

The page tag is displayed on the page; after receiving a triggering indication for the page tag, the application function of the page tag is executed, and the result of executing the application function of the page tag is displayed on the page.

Further, for user convenience, the method also includes stopping displaying the page tag on the page according to a stop trigger indication, after the application function of the page tag is executed and the result of executing the application function of the page tag is displayed on the page.

According to the examples, when the page is parsed, if the page includes the identifiable comment tag, the application function of the page tag defined by the comment tag is obtained. Then the application function of the page tag is executed, and the result of executing the application function of the page tag is displayed on the page. Therefore, the interaction between the page tag and the operating system function is implemented, and the user experience is improved. In addition, the page tag is defined by the comment tag. When the browser parsing the page cannot identify the comment tag, the comment tag may be ignored and not executed, and the page is displayed normally, so that the examples may be applied to browsers of different types.

Further, according to the examples, after the comment tag is parsed and the application function of the page tag defined by the comment tag is obtained, the page tag is displayed on the page, the application function of the page tag is executed according to the trigger indication, and the result of executing the application function of the page tag is displayed, so that executing modes of the application functions of the page tag are enriched, the operations of the user are facilitated, and the user experiences are improved.

Moreover, according to the examples, after the result of executing the application function of the page tag is displayed, the display of the page tag may be stopped according to the stop trigger indication, so that the operations of the user are facilitated, and the user experiences are improved.

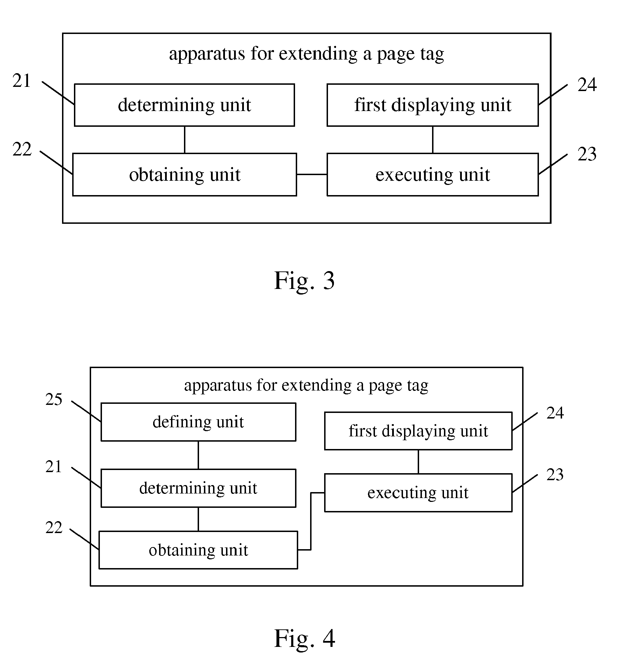

Figure 3 is a schematic diagram illustrating a structure of an apparatus for extending a page tag according to various embodiments of the present invention. As shown in Figure 3, the apparatus includes a determining unit 21, an obtaining unit 22, an executing unit 23 and a first displaying unit 24.

The determining unit 21 is to parse a page, determine whether the page includes an identifiable comment tag.

The obtaining unit 22 is to parse the comment tag and obtain an application function of a page tag defined by the comment tag, when the determining unit 21 determines that the page includes the identifiable comment tag.

The executing unit 23 is to execute the application function of the page tag.

The first displaying unit 24 is to display a result of executing the application function of the page tag on the page.

As shown in Figure 4, the apparatus further includes a defining unit 25.

The defining unit 25 is to define the page tag by the comment tag on the page before the determining unit 21 parses the page and determines whether the page includes the identifiable comment tag. The comment tag is used for explanation, when an application including the comment tag is executed by a device, if the device cannot identify the comment tag, the comment tag may be ignored and not executed. Hence, when the page tag is defined by the comment tag, if the browser parsing the page cannot identify the comment tag, the displaying of other contents of the page will not be affected by the page tag defined by the comment tag, so that the method may be applied to browsers of different types. In addition, the detailed descriptions of the comment tag may refer to the description at 101 and will not be described herein.

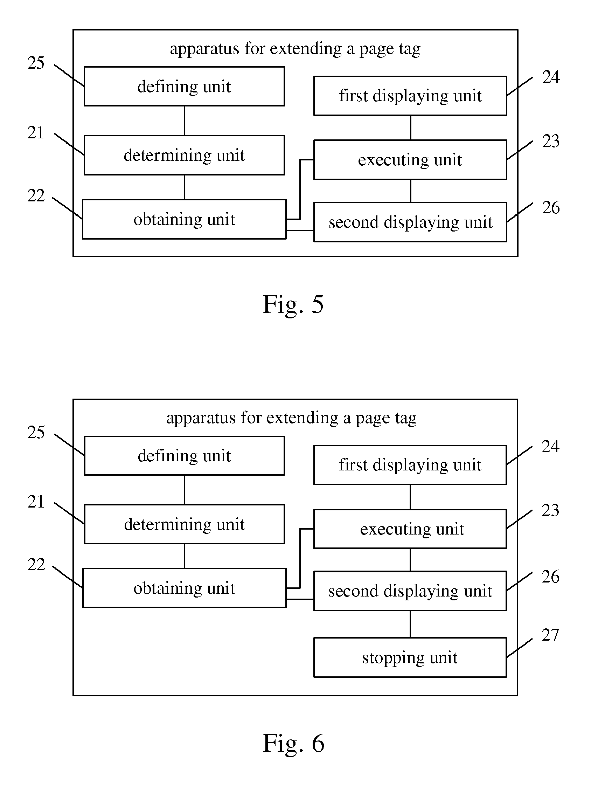

As shown in Figure 5, the apparatus further includes a second displaying unit 26.

The second displaying unit 26 is to display the page tag on the page after the obtaining unit 22 parses the comment tag and obtains the application function of the page tag defined by the comment tag.

The execute unit 23 is further to receive a triggering indication for the page tag, and execute the application function of the page tag according to the triggering indication.

As shown in Figure 6, the apparatus further includes a stopping unit 27.

The stopping unit 27 is to stop displaying the page tag on the page, after the executing unit 23 executes the application function of the page tag and displays the result of executing the application function of the page tag on the page.

It should be noted that, other descriptions of each functional modules of the apparatus for extending the page tag provided by the examples of the present invention may refer to related descriptions corresponding to Figures 1 and 2, and will not be described herein.

In the descriptions of the apparatus for extending the page tag, the "first" and "second" in the names of the unit is to distinguish different units, which doesn't demonstrate good or better embodiment.

According to the examples, when the page is parsed, if the page includes the identifiable comment tag, the application function of the page tag defined by the comment tag is obtained. Then the application function of the page tag is executed, and the result of executing the application function of the page tag is displayed on the page. Therefore, the interaction between the page tag and the operating system function is implemented, and the user experience is improved. In addition, the page tag is defined by the comment tag. When the browser parsing the page cannot identify the comment tag, the comment tag may be ignored and not executed, and the page is displayed normally, so that the examples may be applied to browsers of different types.

Further, according to the examples, after the comment tag is parsed and the application function of the page tag defined by the comment tag is obtained, the page tag is displayed on the page, the application function of the page tag is executed according to the trigger indication, and the result of executing the application function of the page tag is displayed, so that executing modes of the application functions of the page tag are enriched, the operations of the user are facilitated, and the user experiences are improved.

Moreover, according to the examples, after the result of executing the application function of the page tag is displayed, the display of the page tag may be stopped according to the stop trigger indication, so that the operations of the user are facilitated, and the user experiences are improved.

According to the above description of examples, it can be clearly understood by those skilled in the art that the present invention can be realized by software accompanying with necessary general hardware platforms, or by hardware. In many cases, the former is a preferred manner. Based on this, the essential part of the technical solution of the present invention or the part contributed to the prior art can be in the form of a software product, and the computer software product is stored in a storage medium and includes several codes to make a computer device (such as a handset, a personal computer, a server or a network device) perform the method in embodiments of the present invention.

The foregoing is only preferred embodiments of the present invention, and the protection scope of the present invention is not limited to this. Any improvement and replacement which can be made in the technical scope disclosed by the present invention by those skilled in the art should be covered in the protection scope of the invention. And thus, the protection scope of the present invention should be defined by the claims.

## Claims

1. A method for extending a page tag, comprising:
parsing a page; determining whether the page comprises an identifiable comment tag;
parsing the comment tag and obtaining an application function of a page tag defined by the comment tag, when the page comprises the identifiable comment tag;
executing the application function of the page tag; and displaying a result of executing the application function of the page tag on the page.

2. The method of claim 1, further comprising:
defining the page tag by the comment tag in the page, before parsing the page and determining whether the page comprises an identifiable comment tag.

3. The method of claim 2, wherein defining the page tag by the comment tag comprises:
defining the page tag in the comment tag as:
start tag: " <! --" + "mtt" + "especial tag name" + "-->"
and/or
end tag: "<!--" + "/mtt" + "especial tag name" + "-->".

4. The method of claim 1, further comprising:
displaying the page tag on the page, after parsing the comment tag and obtaining the application function of the page tag defined by the comment tag;
wherein
executing the application function of the page tag; and displaying the result of executing the application function of the page tag on the page comprises:
executing the application function of the page tag after receiving a triggering indication for the page tag, and displaying the result of executing the application function of the page tag on the page.

5. The method of claim 4, further comprising:
stopping displaying the page tag on the page, after executing the application function of the page tag and displaying the result of executing the application function of the page tag on the page.

6. An apparatus for extending a page tag, comprising:
a determining unit, to parse a page, determine whether the page comprises an identifiable comment tag;
an obtaining unit, to parse the comment tag and obtain an application function of a page tag defined by the comment tag, when the determining unit determines that the page comprises the identifiable comment tag;
an executing unit, to execute the application function of the page tag; and
a first displaying unit, to display a result of executing the application function of the page tag on the page.

7. The apparatus of claim 6, further comprising:
a defining unit, to define the page tag by the comment tag on the page.

8. The apparatus of claim 7, wherein
the defining unit is to defining the page tag in the comment tag as:
start tag: " <! --" + "mtt" + "especial tag name" + "-->"
and/or
end tag: "<!--" + "/mtt" + "especial tag name" + "-->"

9. The apparatus of claim 6, further comprising:
a second displaying unit, to display the page tag on the page; wherein
the executing unit is further to receive a triggering indication for the page tag, and execute the application function of the page tag according to the triggering indication.

10. The apparatus of claim 9, further comprising:
a stopping unit, to stop displaying the page tag on the page.

11. A computer storage medium, storing computer programs for executing a method according to any of claims 1 to 5.
